# EUROPEAN PATENT SPECIFICATION

(11) **EP 4 419 636 B1**
(45) Date of publication and mention of the grant of the patent: **13.08.2025**
(21) Application number: 22799983.6
(22) Date of filing: 18.10.2022
(51) Int. Cl.: C10M 129/16, C10M 145/36, C10N 10/04, C10N 30/12, C10N 40/25

(54) **LUBRICATING OIL COMPOSITION FOR HYBRID VEHICLES**
SCHMIERÖLZUSAMMENSETZUNG FÜR HYBRIDFAHRZEUGE
COMPOSITION D'HUILE LUBRIFIANTE POUR VÉHICULES HYBRIDES

(30) Priority: 20.10.2021 US 202163257763 P
(43) Date of publication of application: 28.08.2024
(73) Proprietor: Chevron Oronite Company LLC, San Ramon, CA 94583 (US)
(72) Inventor: MONIZ, Menno Anton Stefan, San Ramon, California 94583 (US); VAN LEEUWEN, Jeroen Augustinus, San Ramon, California 94583 (US); HOGENDOORN, Richard, San Ramon, California 94583 (US)
(74) Representative: Haseltine Lake Kempner LLP
(86) International application number: PCT/IB2022/059993
(87) International publication number: WO 2023/067493

(56) References cited:
- EP-A1- 2 650 348
- EP-A2- 1 531 175
- WO-A1-2021/059115
- US-A1- 2014 194 333

## Description

### TECHNICAL FIELD

This disclosure relates to a lubricating oil compositions and methods of using the same. More specifically, the lubricating oil compositions provide rust protection in hybrid vehicles.

### BACKGROUND

Modern lubricating oils are formulated to exacting specifications often set by original equipment manufacturers. This often requires blending carefully selected lubricant additives with base oils of lubricating viscosity. The classes or types of lubricant additives found in lubricating oil compositions include, for example, dispersants, detergents, antioxidants, wear inhibitors, rust inhibitors, corrosion inhibitors, foam inhibitors, and/or friction modifiers. The specific application or use (e.g., hybrid vehicles) will typically govern the set of additives that goes into a lubricating oil composition.

Hybrid vehicles rely on two distinctly different types of motive technologies - internal combustion engine and electric motor. The internal combustion engine mainly drives the vehicle at high speeds. The electric motor drives the vehicle at low speeds and can also assist the internal combustion engine when additional power is needed. It is important for hybrid vehicles to distribute power from the engine and the motor in a well-balanced manner as the vehicle speed increases.

Hybrid vehicle typically feature a start-stop system in which the engine stops when the vehicle comes to a stop and the engine fuel system suspends when the vehicle is driven only by motor or braking. Consequently, accumulation of water and fuel in the oil is a problem as the engine is not able to sufficiently evaporate the water and fuel. This results in the formation of unstable emulsions which negatively impacts engine performance and leads to corrosion/rust in engine parts.

The differences between hybrid vehicles and conventional automobile vehicles are significant enough that conventional engine oils are not optimized for use in hybrid vehicles. As a result, lubricating oil compositions designed specifically for hybrid vehicles are needed. More particularly, there is a need for lubricating oil compositions that improve corrosion/rust protection of engine parts in hybrid vehicles.

WO 2021/059115 A1 discloses an internal combustion engine lubricating oil composition which is used for improving the ability of a lubricating oil contaminated with water and fuel to reduce corrosion in the engine of a hybrid vehicle.

### SUMMARY

In one aspect, there is provided a lubricating oil composition for hybrid vehicles comprising: a major amount of an oil of lubricating viscosity; an ethoxylated alcohol demulsifier of the following formula: R¹-(O-R²)ₙ-OH wherein R¹ is a branched or linear hydrocarbon group having from 6 to 20 carbon atoms, R² is a saturated hydrocarbon group having 2 carbon atoms, and n is an integer from 1 to 10.

In another aspect, there is provided a method of reducing corrosion in hybrid vehicle, the method comprising: supplying to the engine of the hybrid vehicle a lubricating oil composition comprising: a major amount of an oil of lubricating viscosity; an ethoxylated alcohol demulsifier of the following formula: R¹-(O-R²)ₙ-OH wherein R¹ is a branched or linear hydrocarbon group having from 6 to 20 carbon atoms, R² is a saturated hydrocarbon group having 2 carbon atoms, and n is an integer from 1 to 10.

### DETAILED DESCRIPTION

While the disclosure is susceptible to various modifications and alternative forms, specific embodiments thereof are herein described in detail. It should be understood, however, that the description herein of specific embodiments is not intended to limit the disclosure to the particular forms disclosed, but on the contrary, the intention is to cover all modifications, equivalents, and alternatives falling within the scope of the disclosure as defined by the appended claims.

To facilitate the understanding of the subject matter disclosed herein, a number of terms, abbreviations or other shorthand as used herein are defined below. Any term, abbreviation or shorthand not defined is understood to have the ordinary meaning used by a skilled artisan contemporaneous with the submission of this application.

As used herein, the following terms have the following meanings, unless expressly stated to the contrary.

A "major amount" means in excess of 50 weight % of a composition.

A "minor amount" means less than 50 weight % of a composition, expressed in respect of the stated additive and in respect of the total mass of all the additives present in the composition, reckoned as active ingredient of the additive or additives.

"Active ingredients" or "actives" or "oil free" refers to additive material that is not diluent or solvent.

The term "oil soluble" means that for a given additive, the amount needed to provide the desired level of activity or performance can be incorporated by being dissolved, dispersed or suspended in an oil of lubricating viscosity. Usually, this means that at least 0.001% by weight of the additive can be incorporated in a lubricating oil composition. The term "fuel soluble" is an analogous expression for additives dissolved, dispersed or suspended in fuel.

An "engine" or a "combustion engine" is a heat engine where the combustion of fuel occurs in a combustion chamber. An "internal combustion engine" is a heat engine where the combustion of fuel occurs in a confined space ("combustion chamber"). A "spark ignition engine" is a heat engine where the combustion is ignited by a spark, usually from a spark plug. This is contrast to a "compression-ignition engine," typically a diesel engine, where the heat generated from compression together with injection of fuel is sufficient to initiate combustion without an external spark.

The term "hydrocarbyl" refers to a chemical group or moiety derived from hydrocarbons including saturated and unsaturated hydrocarbons. Examples of hydrocarbyl groups include alkenyl, alkyl, polyalkenyl, polyalkyl, phenyl, and the like.

All percentages reported are weight % on an active ingredient basis (i.e., without regard to carrier or diluent oil) unless otherwise stated.

All ASTM standards referred to herein are the most current versions as of the filing date of the present application.

The present invention provides a lubricating oil composition that is useful for engines that are particularly susceptible to corrosion and/or wear (e.g., engines in hybrid vehicles). The lubricating oil composition generally comprise: (a) a major amount of an oil of lubricating viscosity; and (b) an ethoxylated alcohol demulsifier.

### Lubricating Oil Additives

The lubricating oil composition of the present invention may include lubricating oil additives described herein.

A lubricating oil additive composition of the present invention includes an alcohol demulsifier having the following formula:

R¹-(O-R²)ₙ-OH

R¹ is a branched or linear hydrocarbyl group having from 6 to 20 carbon atoms (such as from 8 to 18, 10 to 18, 10 to 16, 12 to 14, and so forth). R² is a saturated hydrocarbon group having from 2 to 4 carbon atoms and n is an integer from 1 to 10 (such as from 2 to 8, 3 to 6, and the like).

In some embodiments, the R¹ hydrocarbyl group can be an alkyl group or an alkenyl group. Alkyl groups refer to saturated hydrocarbyl groups, which can be linear, branched, cyclic, or a combination of cyclic, linear and/or branched. Alkenyl groups refer to unsaturated hydrocarbyl groups, which can be linear, branched, cyclic, or a combination of cyclic, linear and/or branched.

In some embodiments, the ethoxylated alcohol demulsifier is a primary alcohol. In some embodiments, the ethoxylated alcohol demulsifier is a secondary alcohol. In some embodiments, the ethoxylated alcohol demulsifier is a tertiary alcohol.

For illustrative purposes, the following non-limiting examples of the ethoxylated alcohol demulsifier are provided.

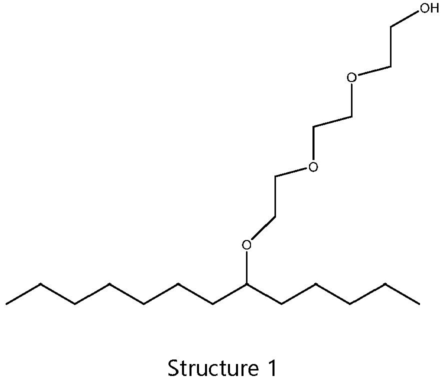

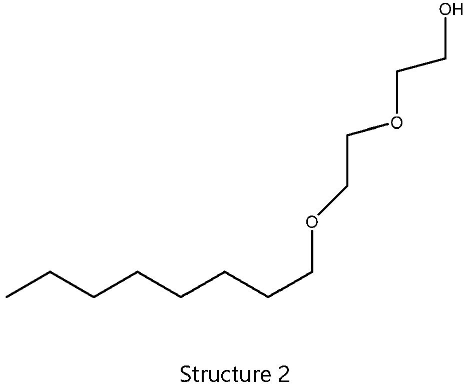

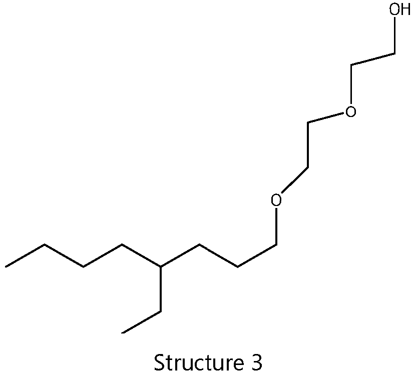

The alcohol demulsifier is present in an amount ranging from about 0.15 to about 5.0 wt. %, based on the total weight of the lubricating oil composition. In one embodiment, the one or more additive compounds can be present in the lubricating oil composition of the present disclosure in an amount ranging from about 0.15 to about 4.0 wt. %, based on the total weight of the lubricating oil composition. In one embodiment, the one or more additive compounds can be present in the lubricating oil composition of the present disclosure in an amount ranging from about 0.15 to about 3.0 wt. %, based on the total weight of the lubricating oil composition. In another embodiment, the one or more additive compounds can be present in the lubricating oil composition of the present disclosure in an amount ranging from about 0.15 to about 2.0 wt. %, based on the total weight of the lubricating oil composition.

### Lubricating Oil Compositions

The oil of lubricating viscosity (sometimes referred to as "base stock" or "base oil") is the primary liquid constituent of a lubricant, into which additives and possibly other oils are blended, for example to produce a final lubricant (or lubricant composition). A base oil, which is useful for making concentrates as well as for making lubricating oil compositions therefrom, may be selected from natural (vegetable, animal or mineral) and synthetic lubricating oils and mixtures thereof.

Definitions for the base stocks and base oils in this disclosure are the same as those found in American Petroleum Institute (API) Publication 1509 Annex E ("API Base Oil Interchangeability Guidelines for Passenger Car Motor Oils and Diesel Engine Oils," December 2016). Group I base stocks contain less than 90% saturates and/or greater than 0.03% sulfur and have a viscosity index greater than or equal to 80 and less than 120 using the test methods specified in Table E-1. Group II base stocks contain greater than or equal to 90% saturates and less than or equal to 0.03% sulfur and have a viscosity index greater than or equal to 80 and less than 120 using the test methods specified in Table E-1. Group III base stocks contain greater than or equal to 90% saturates and less than or equal to 0.03% sulfur and have a viscosity index greater than or equal to 120 using the test methods specified in Table E-1. Group IV base stocks are polyalphaolefins (PAO). Group V base stocks include all other base stocks not included in Group I, II, III, or IV.

Natural oils include animal oils, vegetable oils (e.g., castor oil and lard oil), and mineral oils. Animal and vegetable oils possessing favorable thermal oxidative stability can be used. Of the natural oils, mineral oils are preferred. Mineral oils vary widely as to their crude source, for example, as to whether they are paraffinic, naphthenic, or mixed paraffinic-naphthenic. Oils derived from coal or shale are also useful. Natural oils vary also as to the method used for their production and purification, for example, their distillation range and whether they are straight run or cracked, hydrorefined, or solvent extracted.

Synthetic oils include hydrocarbon oil. Hydrocarbon oils include oils such as polymerized and interpolymerized olefins (e.g., polybutylenes, polypropylenes, propylene isobutylene copolymers, ethylene-olefin copolymers, and ethylene-alphaolefin copolymers). Polyalphaolefin (PAO) oil base stocks are commonly used synthetic hydrocarbon oil. By way of example, PAOs derived from C₈ to C₁₄ olefins, e.g., C₈, C₁₀, C₁₂, C₁₄ olefins or mixtures thereof, may be utilized.

Other useful fluids for use as base oils include non-conventional or unconventional base stocks that have been processed, preferably catalytically, or synthesized to provide high performance characteristics.

Non-conventional or unconventional base stocks/base oils include one or more of a mixture of base stock(s) derived from one or more Gas-to-Liquids (GTL) materials, as well as isomerate/isodewaxate base stock(s) derived from natural wax or waxy feeds, mineral and or non-mineral oil waxy feed stocks such as slack waxes, natural waxes, and waxy stocks such as gas oils, waxy fuels hydrocracker bottoms, waxy raffinate, hydrocrackate, thermal crackates, or other mineral, mineral oil, or even non-petroleum oil derived waxy materials such as waxy materials received from coal liquefaction or shale oil, and mixtures of such base stocks.

Base oils for use in the lubricating oil compositions of present disclosure are any of the variety of oils corresponding to API Group I, Group II, Group III, Group IV, and Group V oils, and mixtures thereof, preferably API Group II, Group III, Group IV, and Group V oils, and mixtures thereof, more preferably the Group III to Group V base oils due to their exceptional volatility, stability, viscometric and cleanliness features.

Typically, the base oil will have a kinematic viscosity at 100°C (ASTM D445) in a range of 2.5 to 20 mm²/s (e.g., 3 to 12 mm²/s, 4 to 10 mm²/s, or 4.5 to 8 mm²/s).

The present lubricating oil compositions may also contain conventional lubricant additives for imparting auxiliary functions to give a finished lubricating oil composition in which these additives are dispersed or dissolved. For example, the lubricating oil compositions can be blended with antioxidants, ashless dispersants, anti-wear agents, detergents such as metal detergents, rust inhibitors, dehazing agents, demulsifying agents, friction modifiers, metal deactivating agents, pour point depressants, viscosity modifiers, antifoaming agents, co-solvents, package compatibilizers, corrosion-inhibitors, dyes, extreme pressure agents and the like and mixtures thereof. A variety of the additives are known and commercially available. These additives, or their analogous compounds, can be employed for the preparation of the lubricating oil compositions of the invention by the usual blending procedures.

Each of the foregoing additives, when used, is used at a functionally effective amount to impart the desired properties to the lubricant. Thus, for example, if an additive is an ashless dispersant, a functionally effective amount of this ashless dispersant would be an amount sufficient to impart the desired dispersancy characteristics to the lubricant. Generally, the concentration of each of these additives, when used, may range, unless otherwise specified, from about 0.001 to about 20 wt %, such as about 0.01 to about 10 wt %.

### Additional Lubricating Oil Additives

The lubricating oil compositions of the present disclosure may also contain other conventional additives that can impart a desirable property to or improve the lubricating oil composition in which these additives are dispersed or dissolved. Any additive known to a person of ordinary skill in the art may be used in the lubricating oil compositions disclosed herein. Some suitable additives have been described in Mortier et al., "Chemistry and Technology of Lubricants", 2nd Edition, London, Springer, (1996); and Leslie R. Rudnick, "Lubricant Additives: Chemistry and Applications", New York, Marcel Dekker (2003). For example, the lubricating oil compositions can be blended with antioxidants (e.g., alkylated diphenylamine, phenolic antioxidants), anti-wear agents, detergents such as metal detergents, rust inhibitors, dehazing agents, demulsifying agents, metal deactivating agents, friction modifiers (e.g., ester-based friction modifier), viscosity modifiers (e.g., olefin copolymer), pour point depressants, antifoaming agents (e.g., silicon-based foam inhibitors), co-solvents, corrosion-inhibitors, dispersants, multifunctional agents, dyes, extreme pressure agents and the like and mixtures thereof. A variety of the additives are known and commercially available. These additives, or their analogous compounds, can be employed for the preparation of the lubricating oil compositions of the disclosure by the usual blending procedures.

In the preparation of lubricating oil formulations, it is common practice to introduce the additives in the form of 10 to 100 wt. % active ingredient concentrates in hydrocarbon oil, e.g. mineral lubricating oil, or other suitable solvent.

Usually these concentrates may be diluted with 3 to 100, e.g., 5 to 40, parts by weight of lubricating oil per part by weight of the additive package in forming finished lubricants, e.g. crankcase motor oils. The purpose of concentrates, of course, is to make the handling of the various materials less difficult and awkward as well as to facilitate solution or dispersion in the final blend.

Each of the foregoing additives, when used, is used at a functionally effective amount to impart the desired properties to the lubricant. Thus, for example, if an additive is a friction modifier, a functionally effective amount of this friction modifier would be an amount sufficient to impart the desired friction modifying characteristics to the lubricant.

In general, the concentration of each of the additives in the lubricating oil composition, when used, may range from about 0.001 wt. % to about 20 wt. %, from about 0.01 wt. % to about 15 wt. %, or from about 0.1 wt. % to about 10 wt. %, from about 0.005 wt.% to about 5 wt.%, or from about 0.1 wt.% to about 2.5 wt.%, based on the total weight of the lubricating oil composition. Further, the total amount of the additives in the lubricating oil composition may range from about 0.001 wt.% to about 20 wt.%, from about 0.01 wt.% to about 10 wt.%, or from about 0.1 wt.% to about 5 wt.%, based on the total weight of the lubricating oil composition.

The following examples are presented to exemplify embodiments of the disclosure but are not intended to limit the disclosure to the specific embodiments set forth. Unless indicated to the contrary, all parts and percentages are by weight. All numerical values are approximate. When numerical ranges are given, it should be understood that embodiments outside the stated ranges may still fall within the scope of the disclosure. Specific details described in each example should not be construed as necessary features of the disclosure.

It will be understood that various modifications may be made to the embodiments disclosed herein. Therefore, the above description should not be construed as limiting, but merely as exemplifications of preferred embodiments. For example, the functions described above and implemented as the best mode for operating the present disclosure are for illustration purposes only. Other arrangements and methods may be implemented by those skilled in the art without departing from the scope of this disclosure. Moreover, those skilled in the art will envision other modifications within the scope of the claims appended hereto.

### EXAMPLES

The following examples are intended for illustrative purposes only and do not limit in any way the scope of the present disclosure.

The lubricating oils were evaluated by the Japanese Industrial Standard (JIS) K2246 test that has been slightly modified for hybrid vehicle lubricants. JIS K2246 test involves coating test piece sample with test oil and checking for rusting on the test sample. The modified JIS K2246 test only differs from the standard JIS K2246 test in that the test piece sample is coated with a mixture containing test oil and distilled water. As a result, the modified JIS K2246 test is more appropriate for evaluating the expected rust performance in vehicles susceptible to rust (e.g., hybrid vehicles). Table 1 summarizes the modified JIS K2246 test results.

The test piece sample was placed in a humidity cabinet above 95% relative humidity (RH) at 49°C and allowed to stand for 72 hours. The test assessed the ability of oils to prevent rust on metal materials or metal products, mainly consisting of iron and steel.

The ASTM D1748 test (humidity cabinet rust test) was performed in a similar fashion. A lower rust rating indicates better anti-corrosion performance. A rating of 10 or lower indicates a pass rating.

The mixture containing test oil and distilled water was prepared according to the following steps:
1. Mix 30 ml of distilled water with 270 ml of test oil in a plastic container.
2. Transfer the mixture of test oil and distilled water to a 500 ml container.
3. Stir the mixture containing the test oil and distilled water on the day of the JIS K2246 test followed by 30 seconds handshaking.
4. Heat the test oil in a convection oven at 70 °C for 30 min.
5. After 30 minutes, remove the test oil from oven and allow the test oil to cool down to room temperature.
6. Just prior to soaking the test sample in the test oil, handshake the test oil again for 30 seconds.
7. Start the JIS K2246 test.

### Comparative Example 1

A lubricating oil composition was prepared that contained a major amount of a group III base oil of lubricating viscosity and the following additives, to provide a finished oil having a 5W-30 SAE viscosity grade:
1. A mixture of borated and non-borated succinimide dispersants;
2. 850 ppm (in terms of calcium content) of a mixture of overbased and low-based/neutral calcium detergents;
3. 610 ppm (in terms of magnesium content) of an overbased magnesium detergent;
4. 810 ppm (in terms of zinc content), of a secondary zinc dialkyldithiophosphate;
5. 0.1 wt% of a molybdenum succinimide complex;
6. 1.5 wt% of a mixture of alkylated diphenylamine antioxidant and phenolic antioxidant;
7. 0.3 wt% of an ester-based friction modifier
8. a minor amount of silicon-based foam inhibitor, olefin copolymer (OCP) viscosity modifier, and pour point depressant.

### Example 1-5

Examples 1-5 were prepared identically as Comparative Example 1, with the addition of 0.5-1.0 wt% of an ethoxylated alcohol demulsifier, ethoxylated secondary alcohol, shown in Structure 1. Table 1 summarizes the JIS K2246 results. Examples 1-5 containing the additional demulsifier shows improved rust inhibition compared to the baseline formulation.

**Table 1**

| Compound (wt%) | Comp. Ex. 1 | Ex. 1 | Ex. 2 | Ex. 3 | Ex. 4 | Ex. 5 | Ex. 6 |
|---|---|---|---|---|---|---|---|
| Ethoxylated alcohol demulsifier | 0 | 0.5 | 0.6 | 0.7 | 0.8 | 0.9 | 1.0 |
| JIS K2246 Rating (Avg. 3 runs) | 34.7 | 6.7 | 6.7 | 2.7 | 5.7 | 4.3 | 6.7 |

As is apparent from the foregoing general description and the specific embodiments, while forms of the present disclosure have been illustrated and described, various modifications can be made without departing from the scope of the present disclosure. Accordingly, it is not intended that the present disclosure be limited thereby.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

Likewise, the term "comprising" is considered synonymous with the term "including." Likewise whenever a composition, an element or a group of elements is preceded with the transitional phrase "comprising," it is understood that we also contemplate the same composition or group of elements with transitional phrases "consisting essentially of," "consisting of," "selected from the group of consisting of," or "is" preceding the recitation of the composition, element, or elements and vice versa.

The terms "a" and "the" as used herein are understood to encompass the plural as well as the singular.

Various terms have been defined above. To the extent a term used in a claim is not defined above, it should be given the broadest definition persons in the pertinent art have given that term as reflected in at least one printed publication or issued patent.

The foregoing description of the disclosure illustrates and describes the present disclosure. Additionally, the disclosure shows and describes only the preferred embodiments but, as mentioned above, it is to be understood that the disclosure is capable of use in various other combinations, modifications, and environments and is capable of changes or modifications within the scope of the concept as expressed herein, commensurate with the above teachings and/or the skill or knowledge of the relevant art. While the foregoing is directed to embodiments of the present disclosure, other and further embodiments of the disclosure may be devised without departing from the basic scope thereof, and the scope thereof is determined by the claims that follow.

It is understood that when combinations, subsets, groups, etc. of elements are disclosed (e.g., combinations of components in a composition, or combinations of steps in a method), that while specific reference of each of the various individual and collective combinations and permutations of these elements may not be explicitly disclosed, each is specifically contemplated and described herein.

The embodiments described hereinabove are further intended to explain best modes known of practicing it and to enable others skilled in the art to utilize the disclosure in such, or other, embodiments and with the various modifications required by the particular applications or uses. Accordingly, the description is not intended to limit it to the form disclosed herein.

## Claims

1. A lubricating oil composition for hybrid vehicles comprising:
a. a major amount of an oil of lubricating viscosity;
b. an ethoxylated alcohol demulsifier of the following formula:
R¹-(O-R²)ₙ-OH
wherein R¹ is a branched or linear hydrocarbon group having from 6 to 20 carbon atoms, R² is a saturated hydrocarbon group having 2 carbon atoms, and n is an integer from 1 to 10, wherein the ethoxylated alcohol demulsifier is secondary alcohol, and wherein the ethoxylated alcohol demulsifier is present in 0.15 wt% to 5 wt% based on total weight of the lubricating oil composition.

2. The lubricating oil composition of claim 1, wherein R¹ is C₁₂-C₁₄ hydrocarbyl group.

3. The lubricating oil of composition of claim 1, wherein n is an integer from 3 to 6.

4. The lubricating oil composition of claim 1, further comprising a polarity modifier, dispersant, detergent, anti-wear agent, antioxidant, friction modifier, viscosity modifier, or pour point depressant.

5. A method of reducing corrosion in hybrid vehicle, the method comprising:
supplying to the engine of the hybrid vehicle a lubricating oil composition comprising:
a. a major amount of an oil of lubricating viscosity;
b. an ethoxylated alcohol demulsifier of the following formula:
R¹-(O-R²)ₙ-OH
wherein R¹ is a branched or linear hydrocarbon group having from 6 to 20 carbon atoms, R² is a saturated hydrocarbon group having 2 carbon atoms, and n is an integer from 1 to 10, wherein the ethoxylated alcohol demulsifier is secondary alcohol, and
wherein the ethoxylated alcohol demulsifier is present in 0.15 wt% to 5 wt% based on total weight of the lubricating oil composition.

6. The method of claim 5, wherein R¹ is C₁₂-C₁₄ hydrocarbyl group.

7. The method of claim 5, wherein n is an integer from 3 to 6.

8. The method of claim 5, wherein the lubricating oil composition further comprises a polarity modifier, dispersant, detergent, anti-wear agent, antioxidant, friction modifier, viscosity modifier, or pour point depressant.

9. Use of a lubricating oil composition comprising an alkoxylated alcohol demulsifier of the following formula:
R¹-(O-R²)ₙ-OH
wherein R¹ is a branched or linear hydrocarbon group having from 6 to 20 carbon atoms, R² is a saturated hydrocarbon group having from 2 to 4 carbon atoms, and n is an integer from 1 to 10, to reduce corrosion in a hybrid vehicle to achieve a passing rating of 10 or less as determined in accordance with the modified JIS K2246 test set out in the description, wherein the lubricating oil composition is supplied to the engine of the hybrid vehicle, wherein the alkoxylated alcohol demulsifier is present in 0.15 wt% to 5 wt% based on total weight of the lubricating oil composition.

10. Use of an alkoxylated alcohol demulsifier of the following formula:
R¹-(O-R²)ₙ-OH
wherein R¹ is a branched or linear hydrocarbon group having from 6 to 20 carbon atoms, R² is a saturated hydrocarbon group having from 2 to 4 carbon atoms, and n is an integer from 1 to 10, in a lubricating oil composition for a hybrid vehicle, to reduce corrosion in the hybrid vehicle to achieve a passing rating of 10 or less as determined in accordance with the modified JIS K2246 test set out in the description, wherein the lubricating oil composition is supplied to the engine of the hybrid vehicle, and wherein the alkoxylated alcohol demulsifier is present in 0.15 wt% to 5 wt% based on total weight of the lubricating oil composition.

11. The use of claims 9 or 10, wherein the alkoxylated alcohol demulsifier is an ethoxylated secondary alcohol.

## Patentansprüche

1. Schmierölzusammensetzung für Hybridfahrzeuge, umfassend:
a. eine größere Menge eines Öls mit Schmierviskosität;
b. einen ethoxylierter-Alkohol-Demulgator der folgenden Formel:
R¹-(O-R²)ₙ-OH
wobei R¹ für eine verzweigte oder lineare Kohlenwasserstoffgruppe mit 6 bis 20 Kohlenstoffatomen steht, R² für eine gesättigte Kohlenwasserstoffgruppe mit 2 Kohlenstoffatomen steht und n für eine ganze Zahl von 1 bis 10 steht, wobei es sich bei dem ethoxylierter-Alkohol-Demulgator um einen sekundären Alkohol handelt und wobei der ethoxylierter-Alkohol-Demulgator in einer Menge von 0,15 Gew.-% bis 5 Gew.-%, bezogen auf das Gesamtgewicht der Schmierölzusammensetzung, vorliegt.

2. Schmierölzusammensetzung nach Anspruch 1, wobei R¹ für eine C₁₂-C₁₄-Hydrocarbylgruppe steht.

3. Schmierölzusammensetzung nach Anspruch 1, wobei n für eine ganze Zahl von 3 bis 6 steht.

4. Schmierölzusammensetzung nach Anspruch 1, ferner umfassend einen Polaritätsmodifikator, ein Dispergiermittel, ein Detergens, ein Verschleißschutzmittel, ein Antioxidans, einen Reibungsmodifikator, einen Viskositätsmodifikator oder einen Pourpoint-Erniedriger.

5. Verfahren zur Verringerung von Korrosion in einem Hybridfahrzeug, wobei das Verfahren Folgendes umfasst:
Zuführen einer Schmierölzusammensetzung zum Motor des Hybridfahrzeugs, wobei die Schmierölzusammensetzung Folgendes umfasst:
a. eine größere Menge eines Öls mit Schmierviskosität;
b. einen ethoxylierter-Alkohol-Demulgator der folgenden Formel:
R¹-(O-R²)ₙ-OH
wobei R¹ für eine verzweigte oder lineare Kohlenwasserstoffgruppe mit 6 bis 20 Kohlenstoffatomen steht, R² für eine gesättigte Kohlenwasserstoffgruppe mit 2 Kohlenstoffatomen steht und n für eine ganze Zahl von 1 bis 10 steht, wobei es sich bei dem ethoxylierter-Alkohol-Demulgator um einen sekundären Alkohol handelt und wobei der ethoxylierter-Alkohol-Demulgator in einer Menge von 0,15 Gew.-% bis 5 Gew.-%, bezogen auf das Gesamtgewicht der Schmierölzusammensetzung, vorliegt.

6. Verfahren nach Anspruch 5, wobei R¹ für eine C₁₂-C₁₄-Hydrocarbylgruppe steht.

7. Verfahren nach Anspruch 5, wobei n für eine ganze Zahl von 3 bis 6 steht.

8. Verfahren nach Anspruch 5, wobei die Schmierölzusammensetzung ferner einen Polaritätsmodifikator, ein Dispergiermittel, ein Detergens, ein Verschleißschutzmittel, ein Antioxidans, einen Reibungsmodifikator, einen Viskositätsmodifikator oder einen Pourpoint-Erniedriger umfasst.

9. Verwendung einer Schmierölzusammensetzung, die einen alkoxylierter-Alkohol-Demulgator der folgenden Formel umfasst:
R¹-(O-R²)ₙ-OH
wobei R¹ für eine verzweigte oder lineare Kohlenwasserstoffgruppe mit 6 bis 20 Kohlenstoffatomen steht, R² für eine gesättigte Kohlenwasserstoffgruppe mit 2 bis 4 Kohlenstoffatomen steht und n für eine ganze Zahl von 1 bis 10 steht, zur Verringerung von Korrosion in einem Hybridfahrzeug zum Erreichen einer Bestehensnote von 10 oder weniger gemäß Bestimmung nach dem in der Beschreibung dargelegten modifizierten JIS-K2246-Test,
wobei die Schmierölzusammensetzung dem Motor des Hybridfahrzeugs zugeführt wird, wobei der alkoxylierter-Alkohol-Demulgator in einer Menge von 0,15 Gew.-% bis 5 Gew.-%, bezogen auf das Gesamtgewicht der Schmierölzusammensetzung, vorliegt.

10. Verwendung eines alkoxylierter-Alkohol-Demulgators der folgenden Formel:
R¹-(O-R²)ₙ-OH
wobei R¹ für eine verzweigte oder lineare Kohlenwasserstoffgruppe mit 6 bis 20 Kohlenstoffatomen steht, R² für eine gesättigte Kohlenwasserstoffgruppe mit 2 bis 4 Kohlenstoffatomen steht und n für eine ganze Zahl von 1 bis 10 steht, in einer Schmierölzusammensetzung für ein Hybridfahrzeug zur Verringerung von Korrosion in dem Hybridfahrzeug zum Erreichen einer Bestehensnote von 10 oder weniger gemäß Bestimmung nach dem in der Beschreibung dargelegten modifizierten JIS-K2246-Test,
wobei die Schmierölzusammensetzung dem Motor des Hybridfahrzeugs zugeführt wird und wobei der alkoxylierter-Alkohol-Demulgator in einer Menge von 0,15 Gew.-% bis 5 Gew.-%, bezogen auf das Gesamtgewicht der Schmierölzusammensetzung, vorliegt.

11. Verwendung nach Anspruch 9 oder 10, wobei es sich bei dem alkoxylierter-Alkohol-Demulgator um einen ethoxylierten sekundären Alkohol handelt.

## Revendications

1. Composition d'huile lubrifiante pour véhicules hybrides, comprenant :
a. une quantité majoritaire d'une huile de viscosité lubrifiante ;
b. un désémulsifiant à base d'alcool éthoxylé de formule suivante :
R¹-(O-R²)ₙ-OH
dans laquelle R¹ est un groupement hydrocarboné ramifié ou linéaire ayant de 6 à 20 atomes de carbone, R² est un groupement hydrocarboné saturé ayant 2 atomes de carbone, et n est un nombre entier allant de 1 à 10, où le désémulsifiant à base d'alcool éthoxylé est un alcool secondaire, et où le désémulsifiant à base d'alcool éthoxylé est présent selon de 0,15% en poids à 5% en poids sur la base du poids total de la composition d'huile lubrifiante.

2. Composition d'huile lubrifiante selon la revendication 1, dans laquelle R¹ est un groupement C₁₂-C₁₄ hydrocarbyle.

3. Composition d'huile lubrifiante selon la revendication 1, dans laquelle n est un nombre entier allant de 3 à 6.

4. Composition d'huile lubrifiante selon la revendication 1, comprenant en outre un modificateur de polarité, un dispersant, un détergent, un agent anti-usure, un antioxydant, un modificateur de friction, un modificateur de viscosité ou un abaisseur de point d'écoulement.

5. Méthode de réduction de la corrosion dans un véhicule hybride, la méthode comprenant :
la fourniture, au moteur du véhicule hybride, d'une composition d'huile lubrifiante, comprenant :
a. une quantité majoritaire d'une huile de viscosité lubrifiante ;
b. un désémulsifiant à base d'alcool éthoxylé de formule suivante :
R¹-(O-R²)ₙ-OH
dans laquelle R¹ est un groupement hydrocarboné ramifié ou linéaire ayant de 6 à 20 atomes de carbone, R² est un groupement hydrocarboné saturé ayant 2 atomes de carbone, et n est un nombre entier allant de 1 à 10, où le désémulsifiant à base d'alcool éthoxylé est un alcool secondaire, et où le désémulsifiant à base d'alcool éthoxylé est présent selon de 0,15% en poids à 5% en poids sur la base du poids total de la composition d'huile lubrifiante.

6. Méthode selon la revendication 5, dans laquelle R¹ est un groupement C₁₂-C₁₄ hydrocarbyle.

7. Méthode selon la revendication 5, dans laquelle n est un nombre entier allant de 3 à 6.

8. Méthode selon la revendication 5, dans laquelle la composition d'huile lubrifiante comprend en outre un modificateur de polarité, un dispersant, un détergent, un agent anti-usure, un antioxydant, un modificateur de friction, un modificateur de viscosité ou un abaisseur de point d'écoulement.

9. Utilisation d'une composition d'huile lubrifiante comprenant un désémulsifiant à base d'alcool alcoxylé de formule suivante :
R¹-(O-R²)ₙ-OH
dans laquelle R¹ est un groupement hydrocarboné ramifié ou linéaire ayant de 6 à 20 atomes de carbone, R² est un groupement hydrocarboné saturé ayant de 2 à 4 atomes de carbone, et n est un nombre entier allant de 1 à 10, afin de réduire la corrosion dans un véhicule hybride en vue d'obtenir une note de passage de 10 ou moins, tel que déterminé conformément à l'essai JIS K2246 modifié, exposé dans la description, où la composition d'huile lubrifiante est fournie au moteur du véhicule hybride, et où le désémulsifiant à base d'alcool alcoxylé est présent selon de 0,15% en poids à 5% en poids sur la base du poids total de la composition d'huile lubrifiante.

10. Utilisation d'un désémulsifiant à base d'alcool alcoxylé de formule suivante :
R¹-(O-R²)ₙ-OH
dans laquelle R¹ est un groupement hydrocarboné ramifié ou linéaire ayant de 6 à 20 atomes de carbone, R² est un groupement hydrocarboné saturé ayant de 2 à 4 atomes de carbone, et n est un nombre entier allant de 1 à 10, dans une composition d'huile lubrifiante pour un véhicule hybride, afin de réduire la corrosion dans le véhicule hybride en vue d'obtenir une note de passage de 10 ou moins, tel que déterminé conformément à l'essai JIS K2246 modifié, exposé dans la description, où la composition d'huile lubrifiante est fournie au moteur du véhicule hybride, et où le désémulsifiant à base d'alcool alcoxylé est présent selon de 0,15% en poids à 5% en poids sur la base du poids total de la composition d'huile lubrifiante.

11. Utilisation selon les revendications 9 ou 10, dans laquelle le désémulsifiant à base d'alcool alcoxylé est un alcool secondaire éthoxylé.
